# EUROPEAN PATENT APPLICATION

(11) **EP 2 770 004 A1**
(43) Date of publication of application: **27.08.2014**
(21) Application number: 12841696.3
(22) Date of filing: 19.10.2012
(51) Int. Cl.: C08G 18/65, C08L 75/06, C09J 175/04

(54) **COPOLYMER POLYURETHANE RESIN HAVING POLY(HYDROXYCARBOXYLIC ACID) SEGMENT AND PENDANT CARBOXYL GROUP, AND EMULSION AND ADHESIVE COMPOSITION INCLUDING SAME**

(30) Priority: 20.10.2011 JP 2011230510
(71) Applicant: Toyobo Co., Ltd., Osaka-shi Osaka 530-8230 (JP)
(72) Inventor: SHINOZAWA, Naoko, Otsu-shi Shiga 520-0292 (JP); KIZUMOTO, Hirotoshi, Otsu-shi Shiga 520-0292 (JP)
(74) Representative: Vossius & Partner
(86) International application number: PCT/JP2012/077112
(87) International publication number: WO 2013/058365

(57) **Abstract**

[Problem] To provide an aqueous dispersion-type biodegradable adhesive which has high initial adhesive strength and which enables the high adhesive strength to be maintained over an extended period without decreasing over time.

[Solution] A copolymer polyurethane resin formed primarily of a structure in which a poly(hydroxycarboxylic acid)polyol (A), a diol compound (B) having at least one carboxyl group in each molecule thereof, a monohydric or polyhydric alcohol compound (C) other than (A) and (B), and a diisocyanate compound (D) are bonded by a polyaddition reaction, the copolymer polyurethane resin being characterized in that the poly(hydroxycarboxylic acid)polyol is composed primarily of an L-lactic acid residue and a residue of an aliphatic hydroxycarboxylic acid other than L-lactic acid, and that the weight fraction of the (B) residue is 1-6% and the weight fraction of the (C) residue is 0-50% with respect to a weight fraction of 100% of the (A) residue. An emulsion and adhesive composition composed primarily of the copolymer polyurethane resin and water.

## Description

### TECHNICAL FIELD

The present invention relates to a copolymer polyurethane resin having a poly(hydroxycarboxylic acid) segment and a pendant carboxyl group, and an aqueous emulsion and an adhesive composition including the copolymer polyurethane resin.

### BACKGROUND ART

In recent years, paints, inks, coating agents, adhesives, pressure-sensitive adhesives, sealing agents, primers, and various kinds of treatment agents for textile products and paper products have been shifting from previous organic solvent systems to aqueous systems, high-solid systems and powder systems in view of the environmental issue. Above all, aqueous systems with water dispersions are most versatile and promising from the viewpoint of good workability and protection of working environments. Moreover, it is preferred that a synthetic resin which forms a water dispersion itself is biodegradable or composed primarily of a plant-derived raw material from the viewpoint of prevention of environmental pollution after dumping.

Polylactic acid resins and polylactic acid-based resins having a polylactic acid segment are considered as preferred materials from the viewpoint of prevention of environmental pollution because they can be produced from plant-derived raw materials and are biodegradable. As a water dispersion of a polylactic acid-based resin, there has been proposed a self-emulsifying dispersion which does not require an emulsifier for dispersing in water because the polylactic acid-based resin itself has an emulsifying function as described in Patent Document 1. By introducing a sulfonic acid salt group by copolymerization with a polylactic acid segment, a water dispersion having a smaller emulsion particle size and having better storage stability is obtained as compared to a conventional forcibly emulsified dispersion using an emulsifier. It has also been proposed that an adhesive excellent in adhesion can be provided by using no emulsifier as described in Patent Document 2.

### PRIOR ART DOCUMENTS

### PATENT DOCUMENTS

Patent Document 1: International Publication No. WO 2010/053065
Patent Document 2: JP-A-2010-275441

### SUMMARY OF THE INVENTION

### PROBLEMS TO BE SOLVED BY THE INVENTION

However, it has been found that when a base is a difficult-to-bond material or heat-sealing conditions are inappropriate, the above-mentioned adhesives may have low initial adhesive strength immediately after heat sealing or suffer a decrease in adhesive strength with elapse of time even if having high initial adhesive strength.

The present invention has been devised in view of circumstances of the conventional techniques described above. That is, an object to be achieved by the present invention is to provide a water dispersion type biodegradable adhesive which has high initial adhesive strength and can retain adhesive strength for a long period of time without suffering a decrease in adhesive strength with elapse of time.

### MEANS FOR SOLVING THE PROBLEMS

The present inventors have conducted extensive studies, and resultantly found that the above-described object can be achieved by using a poly(hydroxycarboxylic acid)polyol composed primarily of an L-lactic acid residue and a residue of an aliphatic hydroxycarboxylic acid other than L-lactic acid, leading to the present invention. That is, the present invention has the following constitutions.
(1) A copolymer polyurethane resin which is composed primarily of a structure in which a poly(hydroxycarboxylic acid)polyol (A), a diol compound (B) having at least one carboxyl group per molecule, and a monohydric or polyhydric alcohol compound (C) other than (A) and (B) are bound by a polyaddition reaction with a diisocyanate compound (D), wherein the poly(hydroxycarboxylic acid)polyol is composed primarily of an L-lactic acid residue and a residue of an aliphatic hydroxycarboxylic acid other than L-lactic acid, and where the weight fraction of the (A) residue is 100%, the weight fraction of the (B) residue is 1 to 6% and the weight fraction of the (C) residue is 0 to 50%.
(2) The copolymer polyurethane resin according to the above (1), wherein the acid value is not less than 50 eq/ton and not more than 500 eq/ton.
(3) The copolymer polyurethane resin according to the above (1) or (2), wherein the residue of an aliphatic hydroxycarboxylic acid other than L-lactic acid is an ε-caprolactone residue or a D-lactic acid residue.
(4) The copolymer polyurethane resin according to any one of the above (1) to (3), comprising a sulfonic acid salt group in a concentration of not less than 50 eq/ton and not more than 500 eq/ton.
(5) The copolymer polyurethane resin according to any one of the above (1) to (4), wherein the weight fraction of the lactic acid residue in the poly(hydroxycarboxylic acid) segment is not less than 50%.
(6) An emulsion which is composed primarily of the copolymer polyurethane resin according to any one of the above (1) to (5) and water.
(7) An emulsion which is composed primarily of the copolymer polyurethane resin according to any one of the above (1) to (5) and water and which does not contain an organic solvent and a surfactant.
(8) An adhesive composition, wherein a polyfunctional compound having reactivity to a carboxyl group is blended in the emulsion according to the above (6) or (7).

### EFFECTS OF THE INVENTION

A poly(hydroxycarboxylic acid) segment of a copolymer polyurethane resin of the present invention is composed primarily of an L-lactic acid residue and a residue of an aliphatic hydroxycarboxylic acid other than L-lactic acid, and is therefore highly amorphous and inhibited from being crystallized with time. Further, it has a pendant carboxyl group, leading to excellent curability. As a result, there can be provided a water dispersion type biodegradable adhesive which has high initial adhesive strength and can retain adhesive strength for a long period of time.

### MODE FOR CARRYING OUT THE INVENTION

### <Copolymer polyurethane resin>

A copolymer polyurethane resin of the present invention is primarily a copolymer polyurethane resin composed of a structure in which a poly(hydroxycarboxylic acid)polyol (A), a diol compound (B) having at least one carboxyl group per molecule, and a monohydric or polyhydric alcohol compound (C) other than (A) and (B) are bound by a polyaddition reaction with a diisocyanate compound (D), wherein the poly(hydroxycarboxylic acid)polyol is composed primarily of an L-lactic acid residue and a residue of an aliphatic hydroxycarboxylic acid other than L-lactic acid, and where the weight fraction of the (A) residue is 100%, the weight fraction of the (B) residue is 1 to 6% and the weight fraction of the (C) residue is 0 to 10%. Here, the phrase "composed primarily of' means that the residue constitutes 50% by weight or more, preferably 65% by weight or more, more preferably 80% by weight or more.

The number average molecular weight of the copolymer polyurethane resin of the present invention is not particularly limited, but is preferably not less than 5,000 and less than 80,000. It is more preferably not less than 10,000 and less than 50,000, further preferably not less than 15,000 and less than 40,000. When the number average molecular weight is excessively low, the number of sulfonic acid metal salt groups per molecule of the copolymer polyurethane resin decreases, so that it tends to become difficult to form stable emulsion particles, and the resin tends to become fragile when molded into a thin film. On the other hand, when the number average molecular weight is excessively high, it is difficult to obtain a homogeneous emulsion.

The copolymer polyurethane resin of the present invention has an acid value, and the acid value is more preferably not less than 50 eq/ton and not more than 500 eq/ton, further preferably not less than 80 eq/ton and not more than 300 eq/ton, still further preferably not less than 90 eq/ton and not more than 150 eq/ton. A copolymer polyurethane resin having an acid value in the above-mentioned range is excellent in water dispersibility, and has a good balance between curability and water resistance and tends to have high bonding strength when used as an adhesive.

The copolymer polyurethane resin of the present invention does not need to have a sulfonic acid salt group, but exhibits an effect of being excellent in water dispersibility in particular when having a sulfonic acid salt group in a concentration of not less than 50 eq/ton and not more than 500 eq/ton. The concentration of the sulfonic acid salt group is more preferably not less than 80 eq/ton and not more than 300 eq/ton, further preferably not less than 100 eq/ton and not more than 200 eq/ton. When the sulfonic acid salt group concentration is excessively low, the particle size of water dispersion particles formed increases to deteriorate storage stability and coating suitability. When the sulfonic acid salt group concentration is excessively high, the solution viscosity of a polyurethane solution increases, so that it becomes difficult for the polymerization reaction to proceed. The coating suitability mentioned here refers to such a property that when an emulsion solution is applied onto a base and subsequently dried, a smooth coating layer excellent in transparency is obtained. When the coating suitability is poor, the surface of the dried coating film is roughened, leading to deterioration of transparency, or a film formation property itself is not obtained, and tattered film chips are formed rather than a coating layer.

In the copolymer polyurethane resin of the present invention, the weight fraction of the poly(hydroxycarboxylic acid) segment is preferably not less than 50% and not more than 95%, more preferably not less than 60% and not more than 90%. A copolymer polyester resin in which the copolymerization ratio of a poly(hydroxycarboxylic acid) segment is in the above-mentioned range has a high biomass degree and is excellent in biodegradability.

### <Poly(hydroxycarboxylic acid)polyol (A)>

The poly(hydroxycarboxylic acid)polyol (A) is an essential copolymerization component of the copolymer polyurethane resin of the present invention. By using the component (A) as a copolymerization component, the copolymer polyurethane resin of the present invention exhibits good biodegradability while having a urethane backbone.

The poly(hydroxycarboxylic acid)polyol (A) is composed primarily of an L-lactic acid residue and a residue of an aliphatic hydroxycarboxylic acid other than L-lactic acid. In the present invention, L-lactic acid is copolymerized with an aliphatic hydroxycarboxylic acid other than L-lactic acid rather than an L-lactic acid homopolymer is used as the poly(hydroxycarboxylic acid)polyol, so that crystallinity of the polylactic acid backbone is collapsed to exhibit an effect of being amorphous. The aliphatic hydroxycarboxylic acid other than L-lactic acid is not particularly limited, and preferred examples may include a D-lactic acid residue, a hydroxycarboxylic acid residue other than lactic acid, and a cyclic lactone residue. The D-lactic acid residue is particularly preferred because it enhances biodegradability and the biomass degree, and an ε-caprolactone residue is particularly preferred because it enhances biodegradability and exhibits an effect of decreasing the glass transition temperature of the copolymer polyurethane resin to improve adhesion.

In the poly(hydroxycarboxylic acid)polyol (A), the ratio of an L-lactic acid residue to a residue of an aliphatic hydroxycarboxylic acid other than L-lactic acid is not particularly limited, but the weight fraction of the L-lactic acid residue is more preferably not less than 40% and not more than 70%, further preferably not less than 50% and not more than 60%. When the weight fraction of the L-lactic acid residue is excessively high, solubility of the poly(hydroxycarboxylic acid)polyol (A) in a general solvent tends to deteriorate to make it difficult to produce a polyurethane resin, and an adhesive using the obtained polyurethane resin may suffer a decrease in adhesive strength after elapse of long time from bonding.

In the poly(hydroxycarboxylic acid)polyol (A), the weight fraction of lactic acid residues including both the D-lactic acid residue and the L-lactic acid residue is preferably not less than 50%. When the weight fraction of the lactic acid residue is excessively low, the biomass degree of the copolymer polyurethane resin is reduced to tend to deteriorate biodegradability.

Preferably the content of the lactic acid residue in the poly(hydroxycarboxylic acid)polyol (A) is increased for enhancing the biomass degree of the polyurethane resin of the present invention. Specifically, the weight fraction of the lactic acid residue in the poly(hydroxycarboxylic acid)polyol (A) is preferably not less than 50% by weight, more preferably not less than 60% by weight, further preferably not less than 70% by weight.

The number average molecular weight of the poly(hydroxycarboxylic acid)polyol (A) is not particularly limited, but is preferably 400 to 10,000, more preferably 800 to 7,000, further preferably 2,000 to 5,000. When the number average molecular weight of the component (A) is excessively low, the ratio of the diisocyanate compound (D) in the urethane resin of the present invention becomes relatively high, so that the biomass degree of the obtained copolymer polyurethane resin cannot be enhanced, and the number of urethane bonds is increased to tend to increase the glass transition temperature, and therefore heat-seal adhesion at a temperature of lower than 100°C tends to deteriorate. On the other hand, when the number average molecular weight is excessively high, the number of hydroxyl groups at the molecular end is decreased to reduce reactivity of the component (A), so that a polymerization reaction tends to be hard to proceed when a copolymer polyurethane resin is obtained.

The poly(hydroxycarboxylic acid)polyol (A) can be obtained by, for example, subjecting L-lactide and one or more of cyclic esters other than L-lactide to ring-opening copolymerization using a polyol as an initiator. The polyol is preferably a diol, further preferably a sulfonic acid salt group-containing diol.

Preferred examples of the cyclic ester other than L-lactide may include hydroxycarboxylic acid cyclic dimers other than L-lactide such as glycolide, D-lactide and DL-lactide, and cyclic lactones such as ε-caprolactone, δ-valerolactone, γ-butyrolactone and β-propiolactone. Among them, ε-caprolactone is preferred because it exhibits an effect of decreasing the glass transition temperature of the copolymer polyurethane resin to improve adhesion, and is excellent in biodegradability and also chemical stability, and D-lactide and DL-lactide are preferred from the viewpoint of their high level of biodegradability and high level of the biomass degree.

The polyol to be used as an initiator is not particularly limited, and an aliphatic polyol such as ethylene glycol, glycerin or pentaerythritol, a polyether polyol such as polyethylene glycol or polyglycerin, or a polyester polyol can be used. When a compound having a functional group is used for the polyol to be used as an initiator, various functions can be added, and for example when a polyol having a sulfonic acid salt group is used, an effect of improving water dispersibility of the obtained copolymer polyurethane is exhibited. The polyol to be used as an initiator is preferably a sulfonic acid salt group-containing diol, and a self-emulsifying function can be imparted to the copolymer polyurethane resin without necessity to copolymerize the sulfonic acid salt group-containing diol at the time of urethane polymerization.

Preferred examples of the sulfonic acid salt group may include sulfonic acid metal salt groups, sulfonic acid quaternary ammonium salt groups and sulfonic acid quaternary phosphonium salt groups. Examples of the sulfonic acid metal salt group may include alkali metal salt groups such as a lithium salt group, a sodium salt group and a potassium salt group. Examples of the sulfonic acid quaternary ammonium salt group and the sulfonic acid quaternary phosphonium salt group include tetraalkyl ammonium salts and tetraalkyl phosphonium salts. Here, the alkyl group is preferably an alkyl group having 1 to 8 carbon atoms, and it is not necessarily required that those salts be composed only of one kind of alkyl group.

The sulfonic acid salt group-containing diol is preferably a polyester diol compound having a chemical structure obtained by a condensation reaction of a dibasic acid having a sulfonic acid salt group and/or a glycol component having a sulfonic acid salt group and another dibasic acid and/or another glycol from the viewpoint of solubility in a general solvent. Examples of the dibasic acid having a sulfonic acid salt group may include isophthalic acid-5-sulfonic acid salts, terephthalic acid-3-sulfonic acid salts and 1,8-naphthalenedicarboxylic anhydride-4-sulfonic acid salts, and one or more selected from those salts are preferred. A diester compound of the above-mentioned dibasic acid may be used, and a diester compound of at least one dibasic acid selected from isophthalic acid-5-sulfonic acid salts, terephthalic acid-3-sulfonic acid salts and 1,8-naphthalenedicarboxylic anhydride-4-sulfonic acid salts is preferred. A diester compound of the above-mentioned dibasic acid and a diol such as ethylene glycol or propylene glycol can be used as a glycol component having a sulfonic acid salt group. Particularly, a compound represented by the following general formula (1) is especially preferred from the viewpoint of availability of a raw material. 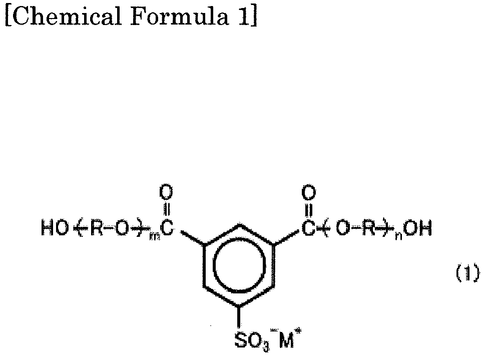 wherein R represents a divalent saturated aliphatic hydrocarbon group having 2 to 5 carbon atoms; M represents Li, Na, K, quaternary ammonium or quaternary phosphonium; m represents a positive integer; n represents a positive integer; and m + n represents an integer of 2 to 10.

In the general formula (1), the quaternary ammonium is preferably one represented by the following general formula (2), and the quaternary phosphonium is preferably one represented by the following general formula (3). 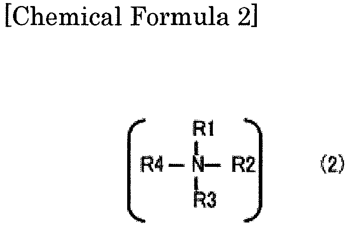 wherein R1, R2, R3 and R4 may be the same or different, and each represent a hydrocarbon group having 1 to 18 carbon atoms. 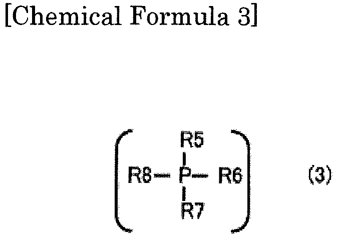 wherein R5, R6, R7 and R8 may be the same or different, and each represent a hydrocarbon group having 1 to 18 carbon atoms.

### <Diol compound (B) having at least one carboxyl group per molecule>

The diol compound (B) is an essential copolymerization component of the copolymer polyurethane resin of the present invention. The diol compound (B) has at least one carboxyl group per molecule. Specific examples may include dimethylol propionic acid, dimethylol butanoic acid and glyceric acid. By using the component (B) as a copolymerization component, a pendant carboxyl group is introduced into the copolymer polyurethane resin of the present invention to exhibit an effect of improving water dispersibility and an effect of improving reactivity with a curing agent. In the present invention, the pendant carboxyl group refers to a carboxyl group present at a site other than the end of a polymer main chain.

The copolymerization ratio of the diol compound (B) is preferably 1 to 6%, more preferably 1 to 5% in terms of the weight fraction of the (B) residue where the weight fraction of the (A) residue is 100%. When the copolymerization ratio of the component (B) is excessively high, stability of particles of the obtained emulsion tends to be deteriorated, and when the copolymerization ratio of the component (B) is excessively low, reactivity with a curing agent is deteriorated, so that sufficient bonding strength tends not to be obtained.

### <Monohydric or polyhydric alcohol compound (C) other than (A) and (B)>

The alcohol compound (C) is not an essential copolymerization component of the copolymer polyurethane resin of the present invention, but may be used as a copolymerization component as long as the weight fraction of the (C) residue is not more than 50% where the weight fraction of the (A) residue is 100%. When a compound having various functional groups is used for the component (C), various functions can be added to the copolymer polyester of the present invention. The component (C) may be composed of one kind of alcohol compound, or may be composed of a mixture of two or more kinds of alcohol compounds.

When a polyol having a sulfonic acid salt group is used as the alcohol compound (C), a sulfonic acid salt group is introduced into the copolymer polyurethane resin in a pendant form to exhibit an effect of improving water dispersibility of the copolymer polyurethane resin. Examples of the polyol having a sulfonic acid salt group may include glycol components having a sulfonic acid salt group as described as a polyol that can be used as an initiator when the poly(hydroxycarboxylic acid)polyol (A) is obtained by subjecting L-lactide and one or more of cyclic esters other than L-lactide to ring-opening copolymerization.

When a polyol having three or more hydroxyl groups per molecule is used as the alcohol compound (C), a branched structure can be formed in the copolymer polyurethane resin of the present invention, so that an effect of easily increasing the molecular weight is exhibited. Examples of the polyol having three or more hydroxyl groups per molecule may include aliphatic polyol compounds such as trimethylolpropane, glycerin and pentaerythritol. When the polyol compound is copolymerized within the bounds of not causing the obtained copolymer polyurethane resin to gel, the molecular weight of the copolymer polyurethane resin is easily increased, and reactivity with a curing agent can be improved. Among those polyols, trimethylolpropane which has a small molecular weight is preferred because it can keep the biomass degree relatively high. The copolymerization ratio of the polyol compound is preferably not less than 0.1 mol%/ and not more than 5 mol%, further preferably not less than 0.5 mol% and not more than 3 mol% based on the total amount of the polylactic acid diol (A), the sulfonic acid metal salt group-containing diol (B) and the diol (C) other than (A) and (B), which form the copolymer polyurethane resin of the present invention.

When a polyether polyol is used as the alcohol compound (C), coating suitability to a film etc. of the copolymer polyurethane resin of the present invention can be improved. Specific examples of the polyether polyol include polyethylene glycol, polypropylene glycol and polytetramethylene glycol, and among them, polyethylene glycol is most preferred from the viewpoint of a coating suitability improvement effect. Use of polypropylene glycol and/or polytetramethylene glycol is also a preferred embodiment, where a coating film excellent in coating suitability and also excellent in water resistance tends to be obtained. The copolymerization ratio of the polyether polyol in the copolymer polyurethane resin of the present invention is preferably 5% by weight to 20% by weight. When the copolymerization ratio is less than 5% by weight, an effect of improving coating suitability to a film etc. is not so strongly exhibited, whereas when the copolymerization ratio is more than 20% by weight, it is not preferred for some applications because the glass transition temperature of the copolymer polyurethane resin decreases, so that the antiblocking characteristic tends to be deteriorated when the resin is used as a coating agent for films. The number average molecular weight of the polyether polyol to be copolymerized is preferably 200 to 6000, but is more preferably 400 to 2000, further preferably 400 to 1000 for enhancing copolymerization reactivity and the coating suitability.

When a monohydric alcohol compound is used as the alcohol compound (C), solubility of the copolymer polyurethane resin of the present invention in a general solvent can be enhanced. Examples of the monohydric alcohol compound include compounds with a polyether such as polyethylene glycol, polypropylene glycol and polytetramethylene glycol methoxy-blocked at one end. Among them, compounds with polyethylene glycol blocked at one end are especially preferred from the viewpoint of improvement of solvent solubility. The number average molecular weight of the compound with a polyether blocked at one end is preferably 200 to 5000, and is more preferably 400 to 2000, further preferably 500 to 1500 for enhancing copolymerization reactivity and solvent solubility.

### <Diisocyanate compound (D)>

The diisocyanate compound (D) is an essential component of the copolymer polyurethane resin of the present invention. Examples of the diisocyanate compound include aromatic diisocyanates such as 2,4-tolylene diisocyanate, 2,6-tolylene diisocyanate, p-phenylene diisocyanate, 4,4'-diphenylmethane diisocyanate, m-phenylene diisocyanate, 3,3'-dimethoxy-4,4'-biphenylene diisocyanate, 2,6-naphthalene diisocyanate, 3,3'-dimethyl-4,4'-biphenylene diisocyanate, 4,4'-diphenylene diisocyanate, 4,4'-diisocyanate diphenyl ether, 1,5-naphthalene diisocyanate and m-xylene diisocyanate; and aliphatic diisocyanates and cycloaliphatic diisocyanates such as hexamethylene diisocyanate, isophorone diisocyanate, hydrogenated products of 4,4'-diphenylmethane diisocyanate and hydrogenated products of m-xylene diisocyanate. Among them, 2,4-tolylene diisocyanate, 4,4'-diphenylmethane diisocyanate and hexamethylene diisocyanate are preferred from the viewpoint of availability.

When the diisocyanate compound to be used for the copolymer polyurethane resin of the present invention is partially replaced with a tri- or higher functional polyisocyanate, the molecular weight of the copolymer polyurethane resin can be easily increased, and reactivity with a curing agent can be improved. However, when the ratio of replacement with a trifunctional polyisocyanate is excessively low, the above-described effects are not exhibited, and when the ratio of replacement is excessively high, gelation of the copolymer polyurethane resin occurs. Therefore, the ratio of replacement with a tri- or higher functional polyisocyanate is preferably not less than 0.1 mol% and not more than 5 mol%, further preferably not less than 0.5 mol% and not more than 3 mol%. Examples of the preferred tri- or higher functional polyisocyanate may include adducts of three molecules of tolylene diisocyanate or three molecules of 1,6-hexane diisocyanate with one molecule of trimethylolpropane or glycerin, and compounds having an isocyanurate ring formed of three molecules of 1,6-hexane diisocyanate.

### <Other copolymerization components>

It may be possible to improve toughness of a coating film by copolymerizing a small amount of an aminoalcohol compound or a diamine compound with the copolymer polyurethane resin of the present invention. Compounds having a relatively low molecular weight, such as N-methylmonoethanolamine and ethylenediamine, are preferred because they can keep the biomass degree relatively high.

### <Emulsion>

The emulsion of the present invention is an emulsion composed primarily of the copolymer polyurethane resin of the present invention and water. Here, the phrase "composed primarily of' means that 50% by weight or more of a solid that forms the emulsion is composed of the copolymer polyurethane resin of the present invention, and 50% by weight or more of a medium that forms the emulsion is composed of water.

The emulsion of the present invention may contain an organic solvent, but in a particularly preferred embodiment of the present invention, an emulsion that does not contain an organic solvent can be formed. The emulsion of the present invention may contain a surfactant, but in a particularly preferred embodiment of the present invention, an emulsion that does not contain a surfactant can be formed. Further, in a particularly preferred embodiment of the present invention, an emulsion that does not contain either an organic solvent or a surfactant can be formed.

The average particle size of the emulsion of the present invention is not particularly limited, but is preferably not more than 200 nm. When the average particle size is large, storage stability of the emulsion is poor, so that the resin tends to be easily precipitated during storage. Further, the coating suitability is deteriorated, so that a transparent and smooth coating layer tends to be hardly formed.

The emulsion of the present invention can be prepared by a method in which first a copolymer polyurethane resin is polymerized in a hydrophilic organic solvent such as methyl ethyl ketone (hereinafter, abbreviated as MEK in some cases), a basic substance such as an amine is then added to and mixed with the resulting hydrophilic organic solvent solution of resin, water is then mixed, and the hydrophilic organic solvent is distilled off from the system. However, the method for preparing the emulsion is not limited to this method. The basic substance such as an amine may be added and stored immediately after polymerization, or may be added immediately before preparation of the emulsion. Other hydrophilic organic solvents may be mixed before water is mixed with the resulting hydrophilic organic solvent solution of resin.

In a particularly preferred embodiment of the present invention, the copolymer polyurethane resin of the present invention can be stably stored as a dispersion liquid with polymer particles dispersed in an aqueous medium that does not contain an organic solvent, and can be applied to a base. On the other hand, coating suitability to a specific base may be improved by blending a lower monoalcohol such as methanol, ethanol, n-propanol or isopropanol, an acetate such as ethyl acetate or butyl acetate, or an amide-based solvent such as dimethylformamide or dimethylacetamide in any concentration as a co-solvent.

### <Adhesive composition>

The emulsion of the present invention itself can be used as an adhesive and a coating agent. When a curing agent is further blended, bonding strength, solvent resistance and water resistance are improved. As the curing agent, polyfunctional compounds having reactivity to a carboxyl group are preferred, and specifically polyfunctional carbodiimide, polyfunctional isocyanate, polyfunctional epoxy and polyfunctional oxazoline are particularly effective.

### EXAMPLES

The present invention will be described further in detail below by way of examples, but the present invention is in no way limited to examples described below, and can be implemented while being appropriately modified within the bounds of being compatible with the spirit of the present invention, and all these modifications are encompassed in the technical scope of the present invention.

Measurement and evaluation methods employed in this specification are as follows.

### (1) Quantitative determination of sulfonic acid sodium salt group concentration

A sodium concentration was quantitatively determined as a measure for estimating the concentration of sulfonic acid sodium salt groups in a sulfonic acid sodium salt group-containing diol mixture-X and a copolymer polyurethane resin. Sodium was quantitatively determined in the following manner: a sample was heated to be carbonized and converted into ashes, and residual ash components were formed into a hydrochloric acid acidic solution, followed by performing quantitative determination using an atomic absorption method. The sulfonic acid metal salt group concentration was calculated based on the assumption that all the detected sodium would be derived from sulfonic acid sodium salt groups contained in the sample. The unit of concentration was the number of equivalents (eq/ton) per 106 g (i.e. 1 ton) of the resin sample.

### (2) Acid value of sulfonic acid sodium salt group-containing diol mixture-X and a copolymer polyurethane resin

In 20 ml of tetrahydrofuran was dissolved 0.2 g of a sample, followed by performing measurement with a 0.1 N-NaOH ethanol solution using phenolphthalein as an indicator. The measured value is shown as the number of equivalents (eq/ton) in 106 g of resin solid components. As a sample, a 80% toluene solution was used for the sulfonic acid sodium salt group-containing diol mixture-X and a solid resin was used for the copolymer polyurethane resin.

### (3) Polymer composition

A sample was dissolved in a mixed solvent of chloroform -d/DMSO-d6 = 1/1 (weight ratio), and a resin composition ratio was determined by 1H-NMR analysis using a nuclear magnetic resonance analyzer (NMR) "GEMINI 200" manufactured by Varian, Inc.

### (4) Number average molecular weight

A sample was dissolved in tetrahydrofuran so as to achieve a sample concentration of about 0.5% by weight, the solution was filtered through a membrane filter made of polytetrafluoroethylene having a pore size of 0.5 µm, and the filtrate was used as a sample for measurement. Using a gel permeation chromatograph (GPC) 150C manufactured by Waters Corporation, measurement was performed at a flow rate of 1 ml/minute using an RI detector with tetrahydrofuran as a carrier solvent. As a column, three columns: Shodex KF-802, KF-804 and KF-806 manufactured by Show a Denko K.K. were coupled to one another, and the column temperature was set to 30°C. A polystyrene standard substance was used as a molecular weight standard sample.

### (5) Glass transition temperature and melting point

In a sample pan made of aluminum was put 5 mg of a sample, the sample was sealed, and measurement was performed while the temperature was elevated from -80°C to 200°C at a temperature elevation rate of 20°C/minute using a differential scanning calorimeter DSC-220 manufactured by Seiko Instruments Inc. The temperature at an intersection of an extended line of the baseline below the glass transition temperature and a tangential line showing the maximum gradient in the transition part was defined as a glass transition temperature. The minimum value of endothermic peaks was defined as a melting point.

### (6) Biomass degree

A copolymerization ratio of a lactic acid unit in the copolymer polyurethane resin was calculated from the NMR analysis value of the polymer composition, and further converted into a weight fraction, and the obtained value was defined as a biomass degree (%).

### (7) Average particle size of emulsion particles

Using Beckman Coulter LS 13 320, an average diameter from an arithmetic average based on a volume statistic from 0.040 µm to 2000 µm was measured, and the measured value was employed as an average particle size of emulsion particles. Measurement of the average particle size was performed after one day than a day that the emulsion was prepared (in the early stage) and after the emulsion was statically stored in a sealed state in a constant-temperature chamber at room temperature (23°C) for 30 days.

### (8) Evaluation of adhesive strength

### «Blending of adhesive composition»

As a curing agent, 1 part by mass of a water-soluble polyfunctional carbodiimide compound (trade name: CARBODILITE V-02 manufactured by Nisshinbo Chemical Inc.) (solid concentration: 40%) was added to and mixed with 50 parts by mass of an aqueous emulsion (solid concentration: 35%) to obtain an adhesive composition. Mixing of the curing agent was performed immediately before coating.

### «Preparation of adhesion sample»

Using a No. 6 wire bar, the adhesive composition was applied to a corona-discharge-treated surface of a base film (polyethylene terephthalate film having a thickness of 25 µm; manufactured by TOYOBO CO., LTD.; hereinafter, abbreviated as "PET film A" in some cases) so as to achieve an application amount of 2 to 3 g/m² after drying, and then dried in an oven at 80°C for 3 seconds. Next, the corona-discharge-treated surface of the PET film A and the coating surface of the said each coating film were put together so as to face each other, and heat-sealed from each of the upper and the lower under conditions of 80°C, 3 kgf/cm² and 10 seconds to prepare an adhesion sample.

### «Measurement of heat-seal bonding strength»

The heat-sealed part was cut to one-inch width to obtain a peel strength measuring specimen. After one day from performing the heat-sealing and after 30 days from being stored, the peel strength measuring specimen was measured for peel strength with a chuck-chuck distance of 3 cm at a peeling speed of 300 mm/min at a peeling angle of 180° using Techno Graph TG-2kN manufactured by Minebea Co., Ltd., and the measured peel strength was specified as an index of adhesive strength. Storage of the peel strength measuring specimen and measurement of peel strength were performed in a constant-temperature and constant-humidity chamber setting a temperature of 23°C and a relative humidity of 50% RH.

The abbreviations of compounds shown in the text and the tables in examples below represent the following compounds.
HDI: hexamethylene diisocyanate
DMPA: dimethylol propionic acid
One end-blocked PEG: polyethylene glycol methoxy-blocked at one end, number average molecular weight: 1000
TMP: trimethylolpropane
PCL: polycaprolactone diol, number average molecular weight: 2000 TEA: triethylamine
MEK: methyl ethyl ketone
IPA: isopropyl alcohol

### Example 1

### 1) Synthesis of sulfonic acid sodium salt group-containing diol mixture-X

In a 1 L glass flask equipped with a thermometer, a stirring rod and a Liebig condenser tube were added 408 parts of 2,2-dimethyl-3-hydroxypropyl-2',2'-dimethyl-3'-hydroxypropanate, 197 parts of dimethyl 5- sodiumsulfoisophthalate and 0.1 parts of a tetrabutyl titanate (TBT) catalyst. The mixture was stirred/reacted for 1 hour at 190°C while methanol was distilled off, and thereafter the temperature was elevated at a rate of 10°C per hour to reach 230°C. After it was confirmed that methanol was completely distilled at 230°C, the temperature was elevated to 250°C, the mixture was stirred under reduced pressure for 10 minutes, and the reaction product was cooled to 100°C. Then, 141 parts of toluene was mixed, and the mixture was homogeneously dissolved. The sulfonic acid sodium salt group concentration and the acid value of the obtained 80 wt% toluene solution were as follows.
Sulfonic acid sodium salt group concentration: 948 eq/ton solution
Acid value: 23 eq/ton solution

### 2) Synthesis of poly(hydroxycarboxylic acid)polyol A

In a 1 L glass flask equipped with a thermometer, a stirring rod and a Liebig condenser tube were added 245 parts of the sulfonic acid sodium salt group-containing diol mixture-X (80 wt% toluene solution), 357 parts of L-lactide, 143 parts of ε-caprolactone, 165 parts of toluene, 0.15 parts of tin octylate as a catalyst and 0.75 parts of ethyl diethyl phosphonoacetate as a catalyst deactivator, and the reaction system was heated to 180°C while being subjected to toluene azeotropic dehydration under a nitrogen gas stream, and was stirred for 3 hours. Thereafter, the system was decompressed to distill off an unreacted residual monomer. About 20 minutes later, decompression was released after the unreacted monomer stopped to be distilled, and the system was cooled to 120°C or lower under a nitrogen gas stream and dissolved in toluene to obtain a 82 wt% toluene solution. The physical properties of the obtained poly(hydroxycarboxylic acid)polyol A are shown in Table 1.

**[Table 1]**

| Poly(hydroxycarboxylic acid)polyol | Number average molecular weight (g/mol) | Weight fraction of lactic acid residue (%) | Concentration of sulfonic acid sodium group (eq/ton) |
|---|---|---|---|
| A | 1500 | 51 | 334 |
| B | 2800 | 54 | 179 |
| C | 2800 | 53 | 179 |
| D | 2800 | 50 | 179 |
| E | 3600 | 55 | 139 |
| F | 5000 | 57 | 101 |
| G | 5000 | 83 | 101 |
| H | 2800 | 60 | 0 |
| I | 2500 | 96 | 0 |
| J | 2400 | 82 | 208 |

### 3) Synthesis of copolymer polyurethane resin (LU-1)

In a 1 L glass flask equipped with a thermometer, a stirring rod and a condenser, 183 parts of the poly(hydroxycarboxylic acid)polyol A (82 wt% toluene solution) was dissolved in 62 parts of MEK, and the solution was heated to 60°C. Then, 25.7 parts of HDI was added, and 0.6 parts of dibutyl tin laurate was added as a catalyst. The mixture was reacted at 70°C for 2 hours, followed by adding 2.8 parts of DMPA. The mixture was reacted at 70°C for 3 hours, followed by adding 9.5 parts of one end-blocked PEG. The mixture was reacted at 70°C for 2 hours, followed by adding 3 parts of TMP. The mixture was further reacted at 70°C for 3 hours, then diluted with 96 parts of MEK, and homogeneously stirred to terminate the reaction. For the obtained copolymer polyurethane resin (LU-1), the composition is shown in Table 2 and physical property values such as the number average molecular weight are shown in Table 3.

**[Table 2]**

| Example · Comparative example | Copolymer polyurethane resin | Resin composition (wt%) | | | | | | | |
|---|---|---|---|---|---|---|---|---|---|
| | | Component (A) | | Component(B) | Component(C) | | | | Component(D) |
| | | Poly(hydroxycarboxylic acid)polyol | | DMPA | PCL | Sulfonic acid, sodium salt group⁻ containing diol mixture-X | One end⁻ blocked PEG | TMP | HDI |
| | | Kind | wt% | wt% | wt% | wit% | wt% | wt% | wt% |
| Example 1 | LU-1 | A | 77.5 | 1.4 | | | 5.4 | 1.9 | 13.8 |
| Example 2 | LU-2 | B | 83.1 | 1.4 | | | 5.2 | 1.2 | 9.1 |
| Example 3 | LU-3 | C | 83.0 | 1.4 | | | 5.3 | 1.2 | 9.1 |
| Example 4 | LU-4 | C | 88.2 | 1.7 | | | | 1.4 | 8.8 |
| Example 5 | LU-5 | C | 76.8 | 3.9 | | | 5.2 | 1.6 | 12.5 |
| Example 6 | LU-6 | D | 83.6 | 1.3 | | | 5.1 | 1.1 | 8.9 |
| Example 7 | LU-7 | E | 83.9 | 1.0 | | | 5.1 | 1.8 | 8.2 |
| Example 8 | LU-8 | F | 84.3 | 1.4 | | | 5.0 | 1.8 | 7.5 |
| Example 9 | LU-9 | G | 60.5 | 1.2 | 23.1 | | 4.9 | 1.7 | 8.6 |
| Example 10 | LU·10 | H | 72.0 | 1.2 | | 8.6 | 4.8 | 1.5 | 11.9 |
| Comparative example 1 | LU-11 | I | 50.7 | | 25.5 | 10.6 | | 1.5 | 11.7 |
| Comparative example 2 | LU-12 | J | 54.1 | 1.1 | 28.1 | | 4.8 | 1.6 | 10.3 |

**[Table 3]**

| Example Comparative example | Copolymer polyurethane resin | Number average molecular weight (10²g/mol) | Glass transition temperature (°C) | Melting point (°C) | Biomass degree (%) | Concentration of sulfonic acid sodium group (eq/ton) | Acid value (eq/ton) |
|---|---|---|---|---|---|---|---|
| Example 1 | LU-1 | 239 | 6 | - | 40.3 | 262 | 137 |
| Example 2 | LU-2 | 232 | -4 | - | 44.9 | 149 | 143 |
| Example 3 | LU-3 | 231 | -2 | - | 44.3 | 149 | 148 |
| Example 4 | LU-4 | 205 | 1 | - | 47.1 | 158 | 147 |
| Example 5 | LU-5 | 248 | 3 | - | 40.9 | 138 | 340 |
| Example 6 | LU-6 | 241 | -4 | - | 41.7 | 149 | 146 |
| Example 7 | LU-7 | 249 | -6 | - | 46.3 | 117 | 99 |
| Example 8 | LU-8 | 253 | -9 | - | 48.3 | 84 | 127 |
| Example 9 | LU-9 | 228 | -5 | - | 50.4 | 61 | 112 |
| Example 10 | LU-10 | 230 | 2 | - | 43.4 | 103 | 109 |
| Comparative example 1 | LU-11 | 294 | 1 | - | 48.6 | 126 | 20 |
| Comparative example 2 | LU-12 | 209 | - | 43 | 44.5 | 113 | 97 |

### 4) Preparation of aqueous emulsion (E-1)

In a 2 L glass flask equipped with a thermometer, a stirring rod and a Liebig condenser tube were added 280 parts of a MEK solution of the copolymer polyurethane resin LU-1, and were heated to 40°C, and 1.5 parts of TEA was added with stirring, and the mixture was homogeneously stirred. Thereafter, 35 parts of IPA and 280 parts of deionized water were added slowly while the contents were kept at 40°C, and the mixture was homogeneously mixed. MEK and IPA were then distilled off under reduced pressure while the contents were kept at 40°C, thereby removing about 195 parts of a MEK/IPA/water mixed liquid. Measurement values of the average particle sizes of the obtained aqueous emulsion E-1 immediately after being prepared and after being left standing for 1 month at room temperature are shown in Table 4.

**[Table 4]**

| Example · Comparative example | Emulsion | Average particle size of emulsion nm | | Bonding strength of PET film N / inch | |
|---|---|---|---|---|---|
| | | Early stage | After 30 days | Early stage | After 30 days |
| Example 1 | E-1 | 46 | 48 | 3.4 | 3.5 |
| Example 2 | E-2 | 205 | 213 | 3.6 | 3.5 |
| Example 3 | E-3 | 78 | 68 | 3.5 | 3.7 |
| Example 4 | E-4 | 162 | 167 | 2.9 | 3.2 |
| Example 5 | E-5 | 74 | 77 | 5.3 | 4.7 |
| Example 6 | E-6 | 75 | 76 | 4.6 | 5.7 |
| Example 7 | E-7 | 59 | 57 | 4.3 | 4.5 |
| Example 8 | E-8 | 121 | 133 | 6.6 | 6.8 |
| Example 9 | E-9 | 156 | 153 | 5.4 | 4.5 |
| Example 10 | E-10 | 88 | 93 | 3.4 | 3.2 |
| Comparative example 1 | E-11 | 121 | 122 | 1.4 | 0.8 |
| Comparative example 2 | E-12 | 122 | 124 | 5.5 | 1.4 |

### Example 2

### 1) Synthesis of poly(hydroxycarboxylic acid)polyol B

In a 1 L glass flask equipped with a thermometer, a stirring rod and a Liebig condenser tube were added 111 parts of the sulfonic acid sodium salt group-containing diol mixture-X (80 wt% toluene solution), 64 parts of D-lactide, 253 parts of L-lactide, 183 parts of ε-caprolactone, 190 parts of toluene, 0.15 parts of tin octylate as a catalyst and 0.77 parts of ethyl diethyl phosphonoacetate as a catalyst deactivator, and the reaction system was heated to 180°C while being subjected to toluene azeotropic dehydration under a nitrogen gas stream, and was stirred for 3 hours. Thereafter, the system was decompressed to distill off an unreacted residual monomer. About 20 minutes later, decompression was released after the unreacted monomer stopped to be distilled, and the system was cooled to 120°C or lower under a nitrogen gas stream and dissolved in toluene to obtain a 82 wt% toluene solution. The physical properties of the obtained poly(hydroxycarboxylic acid)polyol B are shown in Table 1.

### 2) Synthesis of copolymer polyurethane resin (LU-2)

In a 1 L glass flask equipped with a thermometer, a stirring rod and a condenser, 183 parts of the poly(hydroxycarboxylic acid)polyol B (82 wt% toluene solution) was dissolved in 56 parts of MEK, and the solution was heated to 60°C. Then, 16.2 parts of HDI was added, and 0.4 parts of dibutyl tin laurate was added as a catalyst. The mixture was reacted at 70°C for 2 hours, followed by adding 2.5 parts of DMPA. The mixture was reacted at 70°C for 3 hours, followed by adding 9 parts of one end-blocked PEG. The mixture was reacted at 70°C for 2 hours, followed by adding 2 parts of TMP. The mixture was further reacted at 70°C for 3 hours, then diluted with 91 parts of MEK, and homogeneously stirred to terminate the reaction. For the obtained copolymer polyurethane resin (LU-2), the composition is shown in Table 2 and physical property values such as the number average molecular weight are shown in Table 3.

### 3) Preparation of aqueous emulsion (E-2)

An aqueous emulsion (E-2) was prepared in the same manner as in production of the aqueous emulsion (E-1) except that the copolymer polyurethane resin used was changed from (LU-1) to (LU-2). The average particle size of the obtained emulsion (E-2) was determined, and is shown in Table 4.

### Example 3

### 1) Synthesis of poly(hydroxycarboxylic acid)polyol C

In a 1 L glass flask equipped with a thermometer, a stirring rod and a Liebig condenser tube were added 111 parts of the sulfonic acid sodium salt group-containing diol mixture-X raw material-G (80 wt% toluene solution), 313 parts of L-lactide, 187 parts of ε-caprolactone, 190 parts of toluene, 0.15 parts of tin octylate as a catalyst and 0.77 parts of ethyl diethyl phosphonoacetate as a catalyst deactivator, and the reaction system was heated to 180°C while being subjected to toluene azeotropic dehydration under a nitrogen gas stream, and was stirred for 3 hours. Thereafter, the system was decompressed to distill off an unreacted residual monomer. About 20 minutes later, decompression was released after the unreacted monomer stopped to be distilled, and the system was cooled to 120°C or lower under a nitrogen gas stream and dissolved in toluene to obtain a 82 wt% toluene solution. The physical properties of the obtained poly(hydroxycarboxylic acid)polyol C are shown in Table 1.

### 2) Synthesis of copolymer polyurethane resin (LU-3)

In a 1 L glass flask equipped with a thermometer, a stirring rod and a condenser, 183 parts of the poly(hydroxycarboxylic acid)polyol C (82 wt% toluene solution) was dissolved in 56 parts of MEK, and the solution was heated to 60°C. Then, 16.2 parts of HDI was added, and 0.4 parts of dibutyl tin laurate was added as a catalyst. The mixture was reacted at 70°C for 2 hours, followed by adding 2.5 parts of DMPA. The mixture was reacted at 70°C for 3 hours, followed by adding 9 parts of one end-blocked PEG. The mixture was reacted at 70°C for 2 hours, followed by adding 2 parts of TMP. The mixture was further reacted at 70°C for 3 hours, then diluted with 91 parts of MEK, and homogeneously stirred to terminate the reaction. For the obtained copolymer polyurethane resin (LU-3), the composition is shown in Table 2 and physical property values such as the number average molecular weight are shown in Table 3.

### 3) Preparation of aqueous emulsion (E-3)

An aqueous emulsion (E-3) was prepared in the same manner as in production of the aqueous emulsion (E-1) except that the copolymer polyurethane resin used was changed from (LU-1) to (LU-3). The average particle size of the obtained emulsion (E-3) is shown in Table 4.

### Example 4

### 1) Synthesis of copolymer polyurethane resin (LU-4)

In a 1 L glass flask equipped with a thermometer, a stirring rod and a condenser, 183 parts of the poly(hydroxycarboxylic acid)polyol C (82 wt% toluene solution) was dissolved in 56 parts of MEK, and the solution was heated to 60°C. Then, 14.6 parts of HDI was added, and 0.4 parts of dibutyl tin laurate was added as a catalyst. The mixture was reacted at 70°C for 2 hours, followed by adding 2.5 parts of DMPA. The mixture was reacted at 70°C for 3 hours, followed by adding 2 parts of TMP. The mixture was further reacted at 70°C for 3 hours, then diluted with 80 parts of MEK, 1.9 parts of TEA was added, and the mixture was homogeneously stirred to terminate the reaction. For the obtained copolymer polyurethane resin (LU-4), the composition is shown in Table 2 and physical property values such as the number average molecular weight are shown in Table 3.

### 2) Preparation of aqueous emulsion (E-4)

An aqueous emulsion (E-4) was prepared in the same manner as in production of the aqueous emulsion (E-1) except that the copolymer polyurethane resin used was changed from (LU-1) to (LU-4). The average particle size of the obtained emulsion (E-4) is shown in Table 4.

### Example 5

### 1) Synthesis of copolymer polyurethane resin (LU-5)

In a 1 L glass flask equipped with a thermometer, a stirring rod and a condenser, 183 parts of the poly(hydroxycarboxylic acid)polyol C (82 wt% toluene solution) was dissolved in 61 parts of MEK, and the solution was heated to 60°C. Then, 24.2 parts of HDI was added, and 0.6 parts of dibutyl tin laurate was added as a catalyst. The mixture was reacted at 70°C for 2 hours, followed by adding 7.8 parts of DMPA. The mixture was reacted at 70°C for 3 hours, followed by adding 9.8 parts of one end-blocked PEG. The mixture was reacted at 70°C for 2 hours, followed by adding 3 parts of TMP. The mixture was further reacted at 70°C for 3 hours, then diluted with 101 parts of MEK, and homogeneously stirred to terminate the reaction. For the obtained copolymer polyurethane resin (LU-5), the composition is shown in Table 2 and physical property values such as the number average molecular weight are shown in Table 3.

### 2) Preparation of aqueous emulsion (E-5)

An aqueous emulsion (E-5) was prepared in the same manner as in production of the aqueous emulsion (E-1) except that the copolymer polyurethane resin used was changed from (LU-1) to (LU-5), and the added amount of TEA was changed from 1.5 parts to 4.2 parts. The average particle size of the obtained emulsion (E-5) is shown in Table 4.

### Example 6

### 1) Synthesis of poly(hydroxycarboxylic acid)polyol D

In a 1 L glass flask equipped with a thermometer, a stirring rod and a Liebig condenser tube were added 111 parts of the sulfonic acid sodium salt group-containing diol mixture-X (80 wt% toluene solution), 294 parts of L-lactide, 206 parts of ε-caprolactone, 190 parts of toluene, 0.16 parts of tin octylate as a catalyst and 0.78 parts of ethyl diethyl phosphonoacetate as a catalyst deactivator, and the reaction system was heated to 180°C while being subjected to toluene azeotropic dehydration under a nitrogen gas stream, and was stirred for 3 hours. Thereafter, the system was decompressed to distill off an unreacted residual monomer. About 20 minutes later, decompression was released after the unreacted monomer stopped to be distilled, and the system was cooled to 120°C or lower under a nitrogen gas stream and dissolved in toluene to obtain a 82 wt% toluene solution. The physical properties of the obtained poly(hydroxycarboxylic acid)polyol D are shown in Table 1.

### 2) Synthesis of copolymer polyurethane resin (LU-6)

In a 1 L glass flask equipped with a thermometer, a stirring rod and a condenser, 183 parts of the poly(hydroxycarboxylic acid)polyol D (82 wt% toluene solution) was dissolved in 56 parts of MEK, and the solution was heated to 60°C. Then, 16.2 parts of HDI was added, and 0.4 parts of dibutyl tin laurate was added as a catalyst. The mixture was reacted at 70°C for 2 hours, followed by adding 2.5 parts of DMPA. The mixture was reacted at 70°C for 3 hours, followed by adding 9 parts of one end-blocked PEG. The mixture was reacted at 70°C for 2 hours, followed by adding 2 parts of TMP. The mixture was further reacted at 70°C for 3 hours, then diluted with 91 parts of MEK, and homogeneously stirred to terminate the reaction. For the obtained copolymer polyurethane resin (LU-6), the composition is shown in Table 2 and physical property values such as the number average molecular weight are shown in Table 3.

### 3) Preparation of aqueous emulsion (E-6)

An aqueous emulsion (E-6) was prepared in the same manner as in production of the aqueous emulsion (E-1) except that the copolymer polyurethane resin used was changed from (LU-1) to (LU-6). The average particle size of the obtained emulsion (E-6) is shown in Table 4.

### Example 7

### 1) Synthesis of poly(hydroxycarboxylic acid)polyol E

In a 1 L glass flask equipped with a thermometer, a stirring rod and a Liebig condenser tube were added 83 parts of the sulfonic acid sodium salt group-containing diol mixture-X (80 wt% toluene solution), 313 parts of L-lactide, 187 parts of ε-caprolactone, 200 parts of toluene, 0.15 parts of tin octylate as a catalyst and 0.77 parts of ethyl diethyl phosphonoacetate as a catalyst deactivator, and the reaction system was heated to 180°C while being subjected to toluene azeotropic dehydration under a nitrogen gas stream, and was stirred for 3 hours.

Thereafter, the system was decompressed to distill off an unreacted residual monomer. About 20 minutes later, decompression was released after the unreacted monomer stopped to be distilled, and the system was cooled to 120°C or lower under a nitrogen gas stream and dissolved in toluene to obtain a 82 wt% toluene solution. The physical properties of the obtained poly(hydroxycarboxylic acid)polyol E are shown in Table 1.

### 2) Synthesis of copolymer polyurethane resin (LU-7)

In a 1 L glass flask equipped with a thermometer, a stirring rod and a condenser, 183 parts of the poly(hydroxycarboxylic acid)polyol E (82 wt% toluene solution) was dissolved in 56 parts of MEK, and the solution was heated to 60°C. Then, 14.8 parts of HDI was added, and 0.4 parts of dibutyl tin laurate was added as a catalyst. The mixture was reacted at 70°C for 2 hours, followed by adding 2 parts of DMPA. The mixture was reacted at 70°C for 3 hours, followed by adding 8.9 parts of one end-blocked PEG. The mixture was reacted at 70°C for 2 hours, followed by adding 3 parts of TMP. The mixture was further reacted at 70°C for 3 hours, then diluted with 90 parts of MEK, and homogeneously stirred to terminate the reaction. For the obtained copolymer polyurethane resin (LU-7), the composition is shown in Table 2 and physical property values such as the number average molecular weight are shown in Table 3.

### 3) Preparation of aqueous emulsion (E-7)

An aqueous emulsion (E-7) was prepared in the same manner as in production of the aqueous emulsion (E-1) except that the copolymer polyurethane resin used was changed from (LU-1) to (LU-7), and the added amount of TEA was changed from 1.5 parts to 1.2 parts. The average particle size of the obtained emulsion (E-7) is shown in Table 4.

### Example 8

### 1) Synthesis of poly(hydroxycarboxylic acid)polyol F

In a 1 L glass flask equipped with a thermometer, a stirring rod and a Liebig condenser tube were added 58 parts of the sulfonic acid sodium salt group-containing diol mixture-X (80 wt% toluene solution), 313 parts of L-lactide, 187 parts of ε-caprolactone, 200 parts of toluene, 0.15 parts of tin octylate as a catalyst and 0.77 parts of ethyl diethyl phosphonoacetate as a catalyst deactivator, and the reaction system was heated to 180°C while being subjected to toluene azeotropic dehydration under a nitrogen gas stream, and was stirred for 3 hours.

Thereafter, the system was decompressed to distill off an unreacted residual monomer. About 20 minutes later, decompression was released after the unreacted monomer stopped to be distilled, and the system was cooled to 120°C or lower under a nitrogen gas stream and dissolved in toluene to obtain a 82 wt% toluene solution. The physical properties of the obtained poly(hydroxycarboxylic acid)polyol F are shown in Table 1.

### 2) Synthesis of copolymer polyurethane resin (LU-8)

In a 1 L glass flask equipped with a thermometer, a stirring rod and a condenser, 183 parts of the poly(hydroxycarboxylic acid)polyol F (82 wt% toluene solution) was dissolved in 55 parts of MEK, and the solution was heated to 60°C. Then, 13.4 parts of HDI was added, and 0.4 parts of dibutyl tin laurate was added as a catalyst. The mixture was reacted at 70°C for 2 hours, followed by adding 2.5 parts of DMPA. The mixture was reacted at 70°C for 3 hours, followed by adding 8.9 parts of one end-blocked PEG. The mixture was reacted at 70°C for 2 hours, followed by adding 3 parts of TMP. The mixture was further reacted at 70°C for 3 hours, then diluted with 90 parts of MEK, and homogeneously stirred to terminate the reaction. For the obtained copolymer polyurethane resin (LU-8), the composition is shown in Table 2 and physical property values such as the number average molecular weight are shown in Table 3.

### 3) Preparation of aqueous emulsion (E-8)

An aqueous emulsion (E-8) was prepared in the same manner as in production of the aqueous emulsion (E-1) except that the copolymer polyurethane resin used was changed from (LU-1) to (LU-8). The average particle size of the obtained emulsion (E-8) is shown in Table 4.

### Example 9

### 1) Synthesis of poly(hydroxycarboxylic acid)polyol G

In a 1 L glass flask equipped with a thermometer, a stirring rod and a Liebig condenser tube were added 58 parts of the sulfonic acid sodium salt group-containing diol mixture-X (80 wt% toluene solution), 91 parts of D-lactide, 364 parts of L-lactide, 45 parts of ε-caprolactone, 200 parts of toluene, 0.14 parts of tin octylate as a catalyst and 0.72 parts of ethyl diethyl phosphonoacetate as a catalyst deactivator, and the reaction system was heated to 180°C while being subjected to toluene azeotropic dehydration under a nitrogen gas stream, and was stirred for 3 hours. Thereafter, the system was decompressed to distill off an unreacted residual monomer. About 20 minutes later, decompression was released after the unreacted monomer stopped to be distilled, and the system was cooled to 120°C or lower under a nitrogen gas stream and dissolved in toluene to obtain a 82 wt% toluene solution. The physical properties of the obtained poly(hydroxycarboxylic acid)polyol G are shown in Table 1.

### 2) Synthesis of copolymer polyurethane resin (LU-9)

In a 1 L glass flask equipped with a thermometer, a stirring rod and a condenser, 122 parts of the poly(hydroxycarboxylic acid)polyol G (82 wt% toluene solution) and 38 parts of PCL were dissolved in 58 parts of MEK, and the solution was heated to 60°C. Then, 14.2 parts of HDI was added, and 0.4 parts of dibutyl tin laurate was added as a catalyst. The mixture was reacted at 70°C for 2 hours, followed by adding 2 parts of DMPA. The mixture was reacted at 70°C for 3 hours, followed by adding 8 parts of one end-blocked PEG. The mixture was reacted at 70°C for 2 hours, followed by adding 3 parts of TMP. The mixture was further reacted at 70°C for 3 hours, then diluted with 82 parts of MEK, and homogeneously stirred to terminate the reaction. For the obtained copolymer polyurethane resin (LU-9), the composition is shown in Table 2 and physical property values such as the number average molecular weight are shown in Table 3.

### 3) Preparation of aqueous emulsion (E-9)

An aqueous emulsion (E-9) was prepared in the same manner as in production of the aqueous emulsion (E-1) except that the copolymer polyurethane resin used was changed from (LU-1) to (LU-9), and the added amount of TEA was changed from 1.5 parts to 1.3 parts. The average particle size of the obtained emulsion (E-9) is shown in Table 4.

### Example 10

### 1) Synthesis of poly(hydroxycarboxylic acid)polyol H

In a 1 L glass flask equipped with a thermometer, a stirring rod and a Liebig condenser tube were added 19 parts of NPG, 313 parts of L-lactide, 187 parts of ε-caprolactone, 210 parts of toluene, 0.15 parts of tin octylate as a catalyst and 0.77 parts of ethyl diethyl phosphonoacetate as a catalyst deactivator, and the reaction system was heated to 180°C while being subjected to toluene azeotropic dehydration under a nitrogen gas stream, and was stirred for 3 hours. Thereafter, the system was decompressed to distill off an unreacted residual monomer. About 20 minutes later, decompression was released after the unreacted monomer stopped to be distilled, and the system was cooled to 120°C or lower under a nitrogen gas stream and dissolved in toluene to obtain a 82 wt% toluene solution. The physical properties of the obtained poly(hydroxycarboxylic acid)polyol H are shown in Table 1.

### 2) Synthesis of copolymer polyurethane resin (LU-10)

In a 1 L glass flask equipped with a thermometer, a stirring rod and a condenser, 188 parts of the poly(hydroxycarboxylic acid)polyol H (82 wt% toluene solution) was dissolved in 57 parts of MEK, and the solution was heated to 60°C. Then, 24.7 parts of HDI was added, and 0.4 parts of dibutyl tin laurate was added as a catalyst. The mixture was reacted at 70°C for 2 hours, followed by adding 23 parts of the sulfonic acid sodium salt group-containing diol raw material-X (80 wt% toluene solution). The mixture was reacted at 70°C for 2 hours, followed by adding 2.5 parts of DMPA. The mixture was reacted at 70°C for 3 hours, followed by adding 9.8 parts of one end-blocked PEG. The mixture was reacted at 70°C for 2 hours, followed by adding 3 parts of TMP. The mixture was further reacted at 70°C for 3 hours, then diluted with 106 parts of MEK, and homogeneously stirred to terminate the reaction. For the obtained copolymer polyurethane resin (LU-10), the composition is shown in Table 2 and physical property values such as the number average molecular weight are shown in Table 3.

### 3) Preparation of aqueous emulsion (E-10)

An aqueous emulsion (E-10) was prepared in the same manner as in production of the aqueous emulsion (E-1) except that the copolymer polyurethane resin used was changed from (LU-1) to (LU-10), and the added amount of TEA was changed from 1.5 parts to 1.3 parts. The average particle size of the obtained emulsion (E-10) is shown in Table 4.

### Comparative Example 1

### 1) Synthesis of poly(hydroxycarboxylic acid)polyol I

In a 1 L glass flask equipped with a thermometer, a stirring rod and a Liebig condenser tube were added 22 parts of NPG, 100 parts of D-lactide, 400 parts of L-lactide, 210 parts of toluene, 0.14 parts of tin octylate as a catalyst and 0.70 parts of ethyl diethyl phosphonoacetate as a catalyst deactivator, and the reaction system was heated to 180°C while being subjected to toluene azeotropic dehydration under a nitrogen gas stream, and was stirred for 3 hours. Thereafter, the system was decompressed to distill off an unreacted residual monomer. About 20 minutes later, decompression was released after the unreacted monomer stopped to be distilled, and the system was cooled to 120°C or lower under a nitrogen gas stream and dissolved in toluene to obtain a 75 wt% toluene solution. The physical properties of the obtained poly(hydroxycarboxylic acid)polyol I are shown in Table 1.

### 2) Synthesis of copolymer polyurethane resin (LU-11)

In a 1 L glass flask equipped with a thermometer, a stirring rod and a condenser, 26 parts of the sulfonic acid sodium salt group-containing diol raw material-X (80 wt% toluene solution) and 50 parts of PCL were dissolved in 46 parts of MEK, and the solution was heated to 60°C. Then, 23 parts of HDI was added, and 0.4 parts of dibutyl tin laurate was added as a catalyst. The mixture was reacted at 70°C for 2 hours, followed by adding 133 parts of the poly(hydroxycarboxylic acid)polyol I (75 wt% toluene solution). The mixture was reacted at 70°C for 3 hours, followed by adding 3 parts of TMP. The mixture was further reacted at 70°C for 3 hours, then diluted with 113 parts of MEK, and homogeneously stirred to terminate the reaction. For the obtained copolymer polyurethane resin (LU-11), the composition is shown in Table 2 and physical property values such as the number average molecular weight are shown in Table 3.

### 3) Preparation of aqueous emulsion (E-11)

An aqueous emulsion (E-11) was prepared in the same manner as in production of the aqueous emulsion (E-1) except that the copolymer polyurethane resin used was changed from (LU-1) to (LU-11), and the added amount of TEA was changed from 1.5 parts to 0 part. The average particle size of the obtained emulsion (E-11) is shown in Table 4.

### Comparative Example 2

### 1) Synthesis of poly(hydroxycarboxylic acid)polyol J

In a 1 L glass flask equipped with a thermometer, a stirring rod and a Liebig condenser tube were added 133 parts of the sulfonic acid sodium salt group-containing diol mixture-X (80 wt% toluene solution), 100 parts of D-lactide, 400 parts of L-lactide, 190 parts of toluene, 0.14 parts of tin octylate as a catalyst and 0.70 parts of ethyl diethyl phosphonoacetate as a catalyst deactivator, and the reaction system was heated to 180°C while being subjected to toluene azeotropic dehydration under a nitrogen gas stream, and was stirred for 3 hours. Thereafter, the system was decompressed to distill off an unreacted residual monomer. About 20 minutes later, decompression was released after the unreacted monomer stopped to be distilled, and the system was cooled to 120°C or lower under a nitrogen gas stream and dissolved in toluene to obtain a 75 wt% toluene solution. The physical properties of the obtained poly(hydroxycarboxylic acid)polyol J are shown in Table 1.

### 2) Synthesis of copolymer polyurethane resin (LU-12)

In a 1 L glass flask equipped with a thermometer, a stirring rod and a condenser, 133 parts of the poly(hydroxycarboxylic acid)polyol J (75 wt% toluene solution) and 52 parts of PCL were dissolved in 59 parts of MEK, and the solution was heated to 60°C. Then, 19.1 parts of HDI was added, and 0.4 parts of dibutyl tin laurate was added as a catalyst. The mixture was reacted at 70°C for 2 hours, followed by adding 2 parts of DMPA. The mixture was reacted at 70°C for 3 hours, followed by adding 8.9 parts of one end-blocked PEG. The mixture was reacted at 70°C for 2 hours, followed by adding 3 parts of TMP. The mixture was further reacted at 70°C for 3 hours, then diluted with 93 parts of MEK, and homogeneously stirred to terminate the reaction. For the obtained copolymer polyurethane resin (LU-12), the composition is shown in Table 2 and physical property values such as the number average molecular weight are shown in Table 3.

### 3) Preparation of aqueous emulsion (E-12)

An aqueous emulsion (E-12) was prepared in the same manner as in production of the aqueous emulsion (E-1) except that the copolymer polyurethane resin used was changed from (LU-1) to (LU-12), and the added amount of TEA was changed from 1.5 parts to 1.1 parts. The average particle size of the obtained emulsion (E-12) is shown in Table 4.

### INDUSTRIAL APPLICABILITY

The copolymer polyurethane resin of the present invention can form an aqueous emulsion excellent in storage stability, and may be used in industrial products such as inks, coating agents, adhesives and primers. When an aqueous emulsion containing the copolymer polyurethane resin of the present invention or an adhesive having the aqueous emulsion as a principal component is used as a heat-seal adhesive, it is expected to contribute to industries as an environmentally friendly adhesive which exhibits excellent heat-seal bonding strength and which can be used for a long period of time with bonding strength retained even after elapse of time.

## Claims

1. A copolymer polyurethane resin which is composed primarily of a structure in which a poly(hydroxycarboxylic acid)polyol (A), a diol compound (B) having at least one carboxyl group per molecule, and a monohydric or polyhydric alcohol compound (C) other than (A) and (B) are bound by a polyaddition reaction with a diisocyanate compound (D), wherein the poly(hydroxycarboxylic acid)polyol is composed primarily of an L-lactic acid residue and a residue of an aliphatic hydroxycarboxylic acid other than L-lactic acid, and where the weight fraction of the (A) residue is 100%, the weight fraction of the (B) residue is 1 to 6% and the weight fraction of the (C) residue is 0 to 50%.

2. The copolymer polyurethane resin according to claim 1, wherein the acid value is not less than 50 eq/ton and not more than 500 eq/ton.

3. The copolymer polyurethane resin according to claim 1 or 2, wherein the residue of an aliphatic hydroxycarboxylic acid other than L-lactic acid is an ε-caprolactone residue or a D-lactic acid residue.

4. The copolymer polyurethane resin according to any one of claims 1 to 3, comprising a sulfonic acid salt group in a concentration of not less than 50 eq/ton and not more than 500 eq/ton.

5. The copolymer polyurethane resin according to any one of claims 1 to 4, wherein the weight fraction of the lactic acid residue in the poly(hydroxycarboxylic acid) segment is not less than 50%.

6. An emulsion which is composed primarily of the copolymer polyurethane resin according to any one of claims 1 to 5 and water.

7. An emulsion which is composed primarily of the copolymer polyurethane resin according to any one of claims 1 to 5 and water and which does not contain an organic solvent and a surfactant.

8. An adhesive composition, wherein a polyfunctional compound having reactivity to a carboxyl group is blended in the emulsion according to claim 6 or 7.
